# EUROPÄISCHE PATENTSCHRIFT

(11) **EP 2 586 346 B1**
(45) Veröffentlichungstag und Bekanntmachung des Hinweises auf die Patenterteilung: **25.09.2013**
(21) Anmeldenummer: 11186920.2
(22) Anmeldetag: 27.10.2011
(51) Int. Cl.: A47J 45/07

(54) **Kochgeschirr**
Cooking utility
Utensile de cuisson

(43) Veröffentlichungstag der Anmeldung: 01.05.2013
(73) Patentinhaber: AMT Alumetall Gießtechnik GmbH, 58579 Schalksmühle (DE)
(72) Erfinder: Möhl, Harald, 58515 Lüdenscheid (DE)
(74) Vertreter: Dörner, Kötter & Kollegen

(56) Entgegenhaltungen:
- DE-A1-102008 005 567
- DE-U1- 9 418 644
- JP-A- 2002 199 993
- US-A- 3 334 782

## Beschreibung

Die Erfindung betrifft ein Kochgeschirr, insbesondere einen Kochtopf, einen Bräter oder eine Pfanne, umfassend ein Gefäßteil, an dem wenigstens ein Griffteil lösbar befestigt ist.

Kochgeschirre der vorgenannten Art sind vielseitig bekannt. Diese weisen regelmäßig ein metallisches Gefäßteil auf, an dem ein aus Kunststoff oder einem anderen nicht wärmeleitenden Material hergestelltes Griffteil angebracht ist, welches üblicherweise mittels Schrauben an dem Gefäßteil fixiert ist. Zur Verwendung eines Griffteils an mehreren Kochgeschirren ist das Griffteil oftmals über ein Kupplungsstück lösbar mit dem Gefäßteil verbunden.

Ein derartiges lösbares Griffteil ist beispielsweise in DE 94 18 644 U1 offenbart.

Nachteilig an den bekannten Kochgeschirren mit lösbarem Griffteil ist, dass es zu einem unbeabsichtigten Lösen des Griffteils von dem Kupplungsteil kommen kann, wodurch Verletzungsgefahren für den Bediener bestehen.

Hier will die Erfindung Abhilfe schaffen. Der Erfindung liegt die Aufgabe zugrunde, ein Kochgeschirr mit wenigstens einem lösbar befestigten Griffteil bereitzustellen, das einfach montierbar ist und bei dem eine zuverlässige, lösesichere Fixierung des Griffteils an dem Gefäßteil gewährleistet ist. Gemäß der Erfindung wird diese Aufgabe durch die Merkmale des kennzeichnenden Teils des Patentanspruchs 1 gelöst.

Mit der Erfindung ist ein Kochgeschirr mit wenigstens einem lösbaren Griffteil geschaffen, welches einfach zu montieren ist und bei dem eine lösefeste Verbindung des Griffteils mit dem Kupplungsteil gewährleistet ist. Das Griffteil ist über den in der Aufnahme angeordneten Steg, der in die Nut des Kupplungsteils eingreift mit dem Kupplungsteil verbunden. Das Ausbringen des Kupplungsteils aus der Aufnahme ist durch das schwenkbare Sicherungsblech zuverlässig verhindert.

In Weiterbildung der Erfindung ist die Aufnahme derart ausgebildet, dass ein Eingriff bzw. ein Ausbringen des Steges in die bzw. aus der Nut des Kupplungsteils durch Verschwenken des Griffteils relativ zum Kupplungsteil ermöglicht ist, wobei das Sicherungsblech derart ausgebildet ist, dass in einer Sicherungsstellung ein Verschwenken des Griffteils gegenüber dem Kupplungsteil blockiert ist. Hierdurch ist eine zuverlässig gegen ungewolltes Lösen gesicherte Verbindung zwischen Griffteil und Kupplungsteil erzielt.

In weiterer Ausgestaltung der Erfindung ist das Bedienteil durch einen entlang des Griffteils verschiebbaren Schieber gebildet, der durch ein Federelement in Richtung der Sicherungsstellung vorgespannt ist. Hierdurch ist eine komfortable Positionierung des Schiebers in die bzw. aus der Sicherungsstellung erzielt. Bevorzugt ist das Federelement eine innerhalb der Aufnahme angeordnete Schraubenfeder.

In Weiterbildung der Erfindung weist das Kupplungsteil eine Mulde auf, in die das Sicherungsblech einschwenkbar ist, wodurch das Verschwenken des Griffteils relativ zum Kupplungsteil blockiert ist. Hierdurch ist eine geführte Bewegung des Sicherungsbleches in die Sicherungsstellung erzielt. Beim Einbringen des Sicherungsbleches in die Mulde ist eine spielfreie Blockierung des Kupplungsteils in der Aufnahme des Griffteils erzielt.

In weiterer Ausgestaltung der Erfindung sind an dem Kupplungsteil an seinem dem Griffteil zugewandten Ende beabstandet zueinander zwei Arme angeformt, wobei der Schieber ein Stellteil aufweist, das in montiertem Zustand des Griffteils zwischen den Armen durchtritt und das an seinem freien Ende eine Aussparung aufweist, in die das Sicherungsblech hineinragt und über die das Sicherungsblech durch Verschieben des Schiebers schwenkbar ist. Hierdurch ist eine "Verzahnung" zwischen Stellteil, Kupplungsteil und Schieber erzielt, wodurch der erforderliche Bauraum minimiert ist. Weiterhin ist durch diese Anordnung die spielfreie Verbindung zwischen Griffteil und Kupplungsteil weiter gefördert.

In Weiterbildung der Erfindung weist der Schieber zwei parallel zueinander angeordnete Flügel auf, an deren jeweils nach außen gerichteten Seite eine Rastnase angeformt ist, die in jeweils eine innerhalb der Aufnahme angeordnete Führungsnut eingreift. Hierdurch ist eine einfache Montage des Schiebers an dem Griffteil ermöglicht. Der Schieber ist über die Rastnasen in den Führungsnuten verschiebbar befestigt.

In weiterer Ausgestaltung der Erfindung weist das Kupplungsteil an seiner dem Gefäßteil zugewandten Seite wenigstens ein Sackloch auf, in das jeweils ein an dem Gefäßteil angeformtes Bolzenteil eingreift, wobei zur Fixierung des Bolzenteils in dem Sackloch wenigstens ein Federblech angeordnet ist, das einen Durchgang aufweist, in dem wenigstens zwei aus der Ebene des Federblechs abgewinkelte Krallen hineinragen, derart, dass der Durchtritt eines Bolzenteils nur in Richtung des Griffteils ermöglicht ist. Hierdurch ist eine automatische Fixierung des Kupplungsteils an dem Gefäßteil durch einfaches Einschieben des an dem Gefäßteil angeformten Bolzenteils in das Sackloch bewirkt. Die abgewinkelten Krallen des Federblechs legen sich derart winklig an das Bolzenteil an, dass eine unmittelbare Blockierung in Ziehrichtung des Griffteils bewirkt ist. Eine einfache und zugleich zuverlässige Montage des Kupplungsteils an dem Gefäßteil ist so ermöglicht.

In weiterer Ausgestaltung der Erfindung weist das Bolzenteil einen rechtwinkligen, bevorzugt einen quadratischen Querschnitt auf, wobei der Durchgang des Federblechs korrespondierend zu dem Bolzenteil rechteckig ausgebildet ist. Hierdurch ist eine lagerichtige Montage des Kupplungsteils an dem Gefäßteil gewährleistet.

In weiterer Ausgestaltung der Erfindung ist in dem Kupplungsteil wenigstens eine schlitzartige Öffnung zum Einfügen eines Federblechs eingebracht, die in das wenigstens eine Sackloch mündet. Hierdurch ist eine einfache Bestückung des Sacklochs mit einem Federblech ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

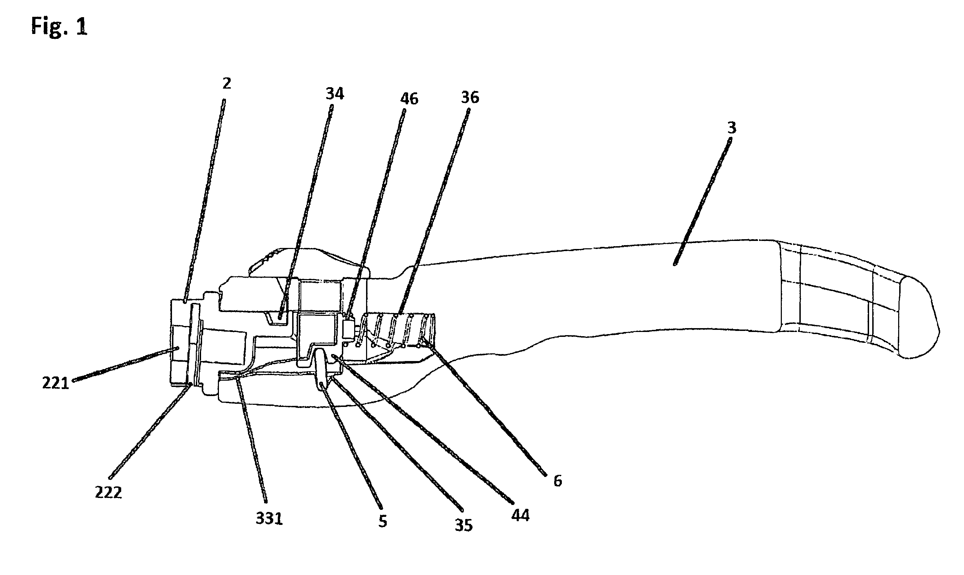

- Figur 1: die schematische Darstellung eines mit einem Kupplungsteil einer - nicht dargestellter - Pfanne lösbar verbundenen Griffteils im Längsschnitt;

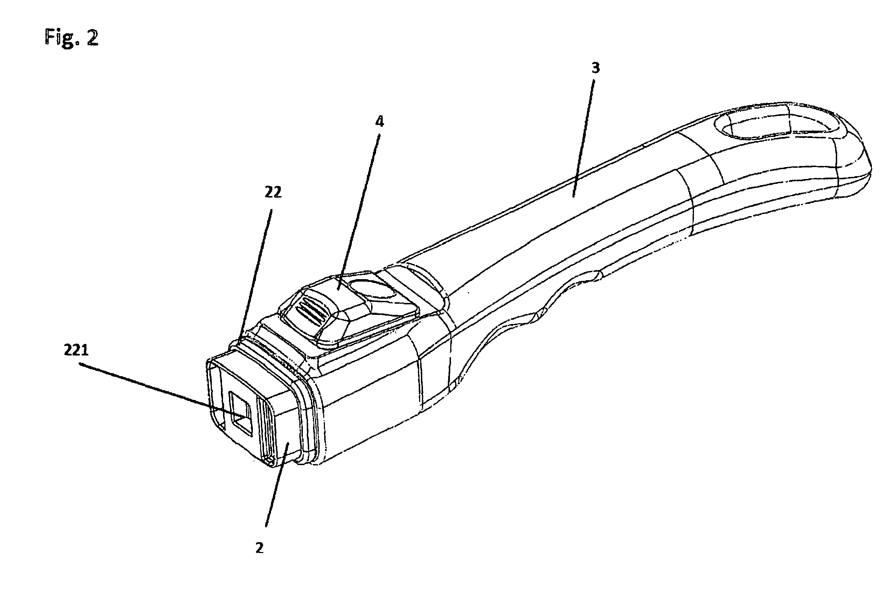

- Figur 2: die räumliche Darstellung des mit dem Kupplungsteil verbundenen Griffteils aus Figur 1;

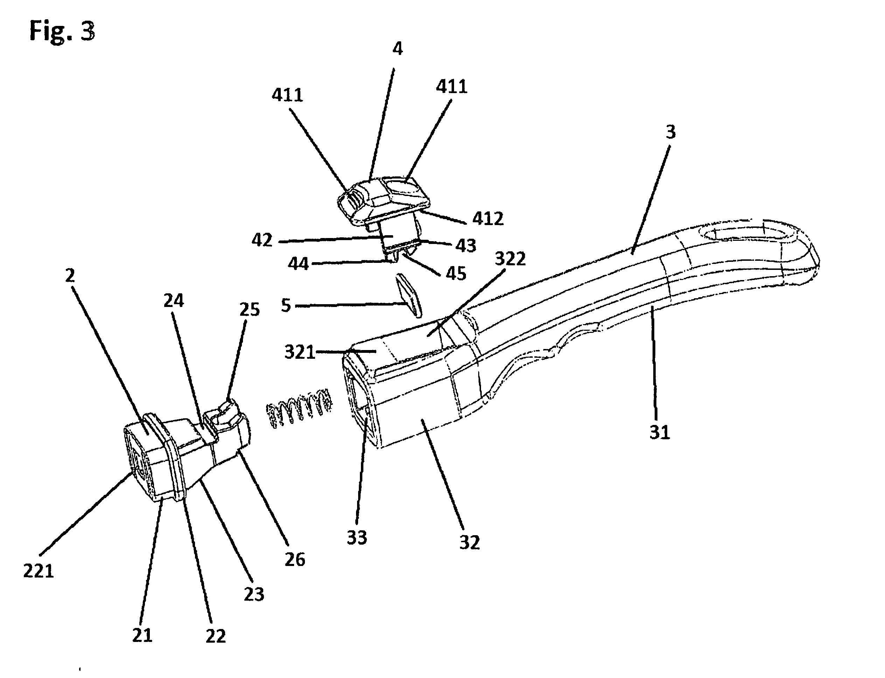

- Figur 3: das Griffteil und das Kupplungsteil aus Figur 2 in Explosionsdarstellung.

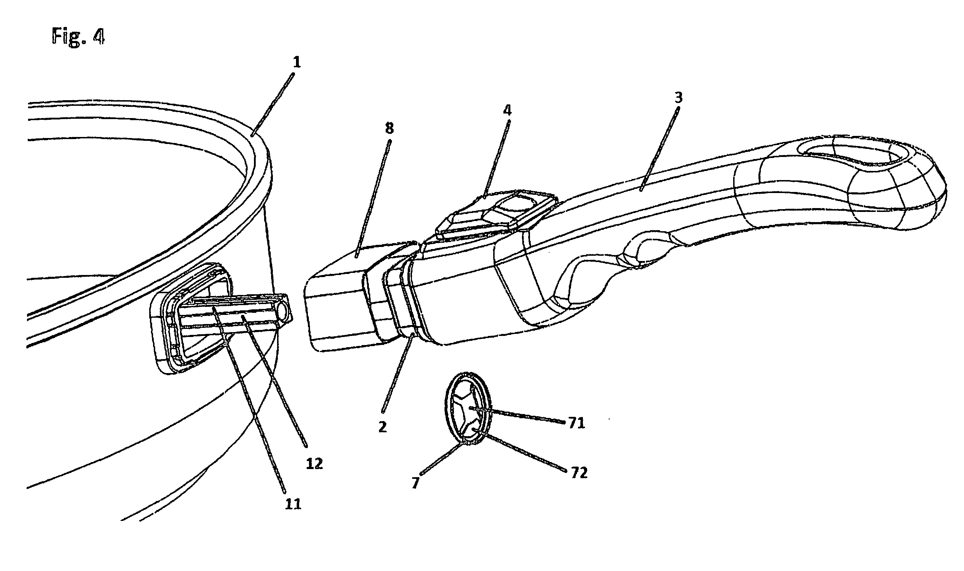

- Figur 4: die räumliche Darstellung der Anordnung aus Figur 1 mit angedeuteter Pfanne.

Die als Ausführungsbeispiel gewählte Pfanne besteht im Wesentlichen aus einem Gefäßteil 1, an dem ein Kupplungsteil 2 befestigt ist, mit dem ein Griffteil 3 lösbar verbunden ist. An dem Gefäßteil 1 ist im Ausführungsbeispiel ein Bolzenteil 11 angeformt, welches einen im Wesentlichen quadratischen Querschnitt aufweist. Das Gefäßteil 1 ist im Ausführungsbeispiel als Aluminiumgussteil ausgebildet, an das das Bolzenteil 11 angegossen ist. Alternativ kann das Bolzenteil 11 auch als separates Bauteil eingegossen sein. Dabei kann das Bolzenteil auch aus einem Nicht-Aluminiumwerkstoff gebildet sein. Zur Materialreduzierung weist das Bolzenteil 11 entlang seiner Mittelachse eine Ausnehmung 12 auf. Die Verbindung zwischen Gefäßteil 1 und Kupplungsteil 2 ist von einem Flammschutzteil 8 umgeben.

Das Kupplungsteil 2 ist im Ausführungsbeispiel als Aluminiumgussteil ausgeführt. An seinem dem Gefäßteil 1 zugewandten Ende weist das Kupplungsteil 2 einen Sockel 21 auf, der durch einen umlaufenden Anschlagsteg 22 begrenzt ist, an den sich ein Kupplungsstück 23 anschließt. Mittig ist in dem Anschlagsteg 22 in Längsrichtung ein Sackloch 221 eingebracht, das sich bis in das Kupplungsstück 23 erstreckt. Weiterhin ist in dem Sockel 21 seitlich eine schlitzartige Öffnung 222 eingebracht, welche in das Sackloch 221 mündet. Die schlitzartige Öffnung 222 ist derart ausgebildet, dass sie ein Federblech 7 derart aufnimmt, dass dessen Durchgang 71 mit dem Sackloch 221 fluchtet, wobei die Krallen 72 des Federblechs 7 in das Sackloch 221 hineinragen.

Das Kupplungsstück 23 ist beabstandet zum Anschlagsteg 22 mit einer Nut 24 zur Aufnahme eines in der Aufnahme 33 des Griffteils 3 angeordneten Steges 34 versehen. An seinem dem Gefäßteil 1 gegenüberliegenden Ende sind an dem Kupplungsteil 2 parallel zueinander zwei Arme 25 angeformt. An den Führungsarmen 25 ist an ihrer dem Boden des Gefäßteils 1 zugewandten Unterseite jeweils eine Mulde 26 zur Aufnahme des Sicherungsblechs 5 eingeformt.

Das Griffteil 3 ist im Wesentlichen gebildet aus einem Griffstück 31, an dessen dem Kupplungsteil 2 zugewandten Seite ein Aufnahmestück 32 angeformt ist. Das Griffteil 3 ist im Ausführungsbeispiel als Kunststoffspritzteil ausgeführt. An seiner dem Boden des Gefäßteils 1 entgegengesetzten Oberseite ist an dem Aufnahmestück 32 außen eine ebene Gleitfläche 321 angeordnet, in die ein Durchbruch 322 eingebracht ist, der in einer entlang seiner Mittelachse in das Aufnahmestück 32 eingeformten Aufnahme 33 mündet. Die Aufnahme 33 weist eine Innenkontur auf, die im Wesentlichen der Außenkontur des Kupplungsstücks 23 entspricht, wobei in ihrem dem Kupplungsteil 2 zugewandten, offenen Ende ein Auslauf 331 eingeformt ist, der ein Einschwenken des Kupplungsteils 2 in die Aufnahme 33 ermöglicht. Dem Durchbruch 322 vorgelagert ist innerhalb der Aufnahme 33 ein Steg 34 zum Eingriff in die Nut 24 des Kupplungsteils 2 angeformt. Dem Durchbruch 322 gegenüberliegend ist weiterhin in der Aufnahme 33 eine Mulde 35 zur schwenkbaren Lagerung eines Sicherungsblechs 5 eingeformt. Endseitig ist in der Aufnahme 33 etwa auf der Mittelachse des Aufnahmestücks 32 ein Federsitz 36 zur Aufnahme einer Feder 6 eingeformt. Seitlich sind innerhalb der Aufnahme gegenüberliegend zwei - nicht dargestellte - horizontale Führungsnuten eingebracht.

Auf der Gleitfläche 321 des Aufnahmestücks 32 des Griffteils 3 ist ein Schieber 4 verschiebbar angeordnet. Der Schieber 4 besteht im Wesentlichen aus einem Bedienkopf 41, zu dessen Bedienung Mulden 411 eingeformt sind. An seiner dem Aufnahmestück 32 zugewandten Unterseite ist der Schieber 4 mit einer ebenen Gleitfläche 412 versehen, die auf der Gleitfläche 321 des Aufnahmestücks 32 aufliegt. An der Gleitfläche 412 sind orthogonal zu dieser zwei Flügel 42 parallel beabstandet zueinander angeformt. An ihren jeweils nach außen gerichteten Seiten sind die Flügel 42 jeweils mit einem in Form eines horizontal verlaufenden Steges ausgeführten Rastnase 43 zum Eingriff in die - nicht dargestellte - Führungsnut der Aufnahme 33 des Griffteils 3 versehen. Zwischen den Flügeln 42 ist orthogonal zur Gleitfläche 412 ein Stellteil 44 angeformt, an dessen freien Ende eine in etwa parabelförmige Aussparung 45 zur Aufnahme des Sicherungsblechs 5 eingeformt ist. Weiterhin ist an dem Stellteil 44 an seiner dem Federsitz 36 zugewandten Seite ein Zylinder 46 angeformt, welcher der zentrierten Aufnahme der Schraubenfeder 6 dient. Der Schieber 4 ist über die Schraubenfeder 6 in Richtung des Kupplungsteils 2 vorgespannt.

Das Sicherungsblech 5 ist im Wesentlichen in Form eines rechteckförmigen Metallplättchens ausgebildet, dessen Seitenkanten abgerundet sind. Das Sicherungsblech 5 liegt mit einer Längsseite in der Mulde 35 der Aufnahme 33 und mit der anderen Längsseite in der Aussparung 45 des Stellteils 44 des Schiebers 4 an, sodass es durch Verschieben des Schieber 4 entlang der Gleitfläche 321 des Aufnahmestücks 32 schwenkbar ist.

Zur lösbaren Befestigung des Griffteils 3 an dem mit den Gefäßteil 1 verbundenen Kupplungsteil 2 wird das Griffteil 3 derart auf das Kupplungsteil 2 aufgeschwenkt, dass das Kupplungsstück 23 in die Aufnahme 33 des Aufnahmestücks 32 einschwenkt, wobei der Steg 34 in der Nut 24 des Kupplungsstücks 23 anliegt. Dabei wird das Sicherungsblech 5 verschwenkt, und mit diesem wird der Mittelsteg 44 gegen die Federkraft der Schraubenfeder 6 bewegt, bis das Sicherungsblech 5 in die Mulde 26 der Arme 25 des Kupplungsstücks 23 eingleitet, wodurch das Stellteil 44 und damit auch der Schieber 4 zurückbewegt wird. Der Schieber 4 ist dabei über die in den - nicht dargestellten - Führungsnuten
der Aufnahme 33 geführten Rastnasen 43 der Flügel 42 geführt. Liegt das Sicherungsblech 5 in der Mulde 26 der Arme 25 des Kupplungsstücks 23 an, ist ein Verschwenken des Kupplungsstücks 22 innerhalb der Aufnahme 33 nicht mehr möglich. Das Kupplungsteil 2 ist somit zuverlässig mit dem Griffteil 3 verbunden.

Zum Lösen des Griffteils 3 vom Kupplungsteil 2 wird der Schieber 4 gegen die Vorspannkraft der Schraubenfeder 6 zurückgeschoben, wodurch das Sicherungsblech aus der Mulde 26 der Arme 25 des Kupplungsstücks 23 des Kupplungsteils 2 herausgeschwenkt wird. Nunmehr ist ein Verschwenken des Kupplungsteils 2 innerhalb der Aufnahme 33 ermöglicht. Durch eine Schwenkbewegung des Griffteils schwenkt die Aufnahme 33 relativ zum Kupplungsstück 23 aus, wodurch der Steg 34 aus der Nut 24 des Kupplungsstücks 23 herausbewegt wird. Das Griffteil 3 kann nun von dem Kupplungsteil 2 abgezogen werden.

## Patentansprüche

1. Kochgeschirr, umfassend ein Gefäßteil, an dem wenigstens ein Griffteil lösbar befestigt ist, wobei an dem Gefäßteil (1) ein Kupplungsteil (2) befestigt ist, das in einer Aufnahme (33) des Griffteils (3) eingebracht ist, wobei das Kupplungsteil (2) eine Nut (24) aufweist, in die ein in der Aufnahme (33) angeordneter Steg (34) eingreift und wobei in der Aufnahme (33) ein durch ein an dem Griffteil (3) angeordnetes Bedienteil schwenkbares Sicherungsblech (5) angeordnet ist, das in einer Sicherungsstellung ein Ausbringen des Kupplungsteil (2) aus der Aufnahme (33) verhindert, **dadurch gekennzeichnet, dass** das Bedienteil durch einen entlang des Griffteils (3) verschiebbaren Schieber (4) gebildet ist, der durch ein Federelement in Richtung der Sicherungsstellung vorgespannt ist, wobei an dem Kupplungsteil (2) an seinem dem Griffteil (3) zugewandten Ende beabstandet zueinander zwei Arme (25) angeformt sind, wobei der Schieber (4) ein Stellteil (44) aufweist, das in montiertem Zustand des Griffteils (3) zwischen den Armen (25) durchtritt und das an seinem freien Ende eine Aussparung (45) aufweist, in die das Sicherungsblech (5) hineinragt und über die das Sicherungsblech (5) durch Verschieben des Schiebers (4) schwenkbar ist.

2. Kochgeschirr nach Anspruch 1, **dadurch gekennzeichnet, dass** die Aufnahme (33) derart ausgebildet ist, dass ein Eingriff bzw. ein Ausbringen des Steges (34) in die bzw. aus der Nut (24) des Kupplungsteils (2) durch Verschwenken des Griffteils (3) relativ zum Kupplungsteil (2) ermöglicht ist, wobei das Sicherungsblech (5) derart ausgebildet ist, dass in einer Sicherungsstellung ein Verschwenken des Griffteils (3) gegenüber dem Kupplungsteil (2) blockiert ist.

3. Kochgeschirr nach Anspruch 2, **dadurch gekennzeichnet, dass** das Federelement eine innerhalb der Aufnahme (33) angeordnete Schraubenfeder (6) ist,

4. Kochgeschirr nach einem der vorgenannten Ansprüche, **dadurch gekennzeichnet, dass** das Kupplungsteil (2) eine Mulde (26) aufweist in die das Sicherungsblech (5) einschwenkbar ist, wodurch das Verschwenken des Griffteils (3) relativ zum Kupplungsteil (2) blockiert ist.

5. Kochgeschirr nach einem der Ansprüche 2 bis 4, **dadurch gekennzeichnet, dass** der Schieber (4) zwei parallel zueinander angeordnete Flügel (42) aufweist, an deren jeweils nach außen gerichteten Seite eine Rastnase (43) angeformt ist, die in jeweils eine innerhalb der Aufnahme (33) angeordnete Führungsnut eingreift.

6. Kochgeschirr nach einem der vorgenannten Ansprüche, **dadurch gekennzeichnet, dass** das Kupplungsteil (2) an seiner dem Gefäßteil (1) zugewandten Seite wenigstens ein Sackloch (221) aufweist, in das jeweils ein an dem Gefäßteil (1) angeformtes Bolzenteil (11) eingreift, wobei zur Fixierung des Bolzenteils (11) in dem Sackloch (221) wenigstens ein Federblech (7) angeordnet ist, das einen Durchgang (71) aufweist, in den wenigstens zwei aus der Ebene des Federblechs (7) abgewinkelte Krallen (72) hineinragen, derart, dass der Durchtritt eines Bolzenteils (11) nur in Richtung des Griffteils (3) ermöglicht ist.

7. Kochgeschirr nach Anspruch 6, **dadurch gekennzeichnet, dass** das Bolzenteil (11) einen rechteckigen, bevorzugt einen quadratischen Querschnitt aufweist, wobei der Durchgang (71) des Federblechs (7) korrespondierend zu dem Bolzenteil (11) rechteckig ausgebildet ist.

8. Kochgeschirr nach Anspruch 6 oder 7, **dadurch gekennzeichnet, dass** in dem Kupplungsteil (2) wenigstens eine schlitzartige Öffnung (222) zum Einfügen eines Federblechs (7) eingebracht ist, die in das wenigstens eine Sackloch (221) mündet.

## Claims

1. Cooking utility comprising a container part to which at least one handle part is detachably attached, where a coupling part (2) is fixed to the container part (1), which coupling part (2) is inserted into a retaining seat (33) in the handle part (3), where the coupling part (2) has a groove (24) into which a ridge (34) arranged in the retaining seat (33) engages and where a locking plate (5), which can be pivoted by an operating part arranged on the handle part (3), is arranged in the retaining seat (33) and which, in its locked position, prevents the coupling part (2) from becoming detached from the retaining seat (33), **characterised in that** the operating part is formed by a slide (4) which can be moved along the handle part (3), which slide (4) is pre-tensioned by a spring element in the direction of the locked position, where two arms (25) are formed at a distance from one another at the end of the coupling part (2) nearest to the handle part (3), where the slide (4) has a shaft part (44) which, in the mounted state of the handle part (3), passes between the arms (25), and which has a recess (45) at its free end into which the locking plate (5) projects and through which the locking plate (5) is pivoted by moving the slide (4).

2. Cooking utility in accordance with claim 1, **characterised in that** the retaining seat (33) is formed in such a way that the engagement or disengagement of the ridge (33) from the groove (24) of the coupling part (2) is achieved by pivoting the handle part (3) in relation to the coupling part (2), where the locking plate (5) is formed in such a way that, in the locked position, the handle part (3) is prevented from pivoting against the coupling part (2).

3. Cooking utility in accordance with claim 2, **characterised in that** the spring element is a helical spring (6) arranged inside the retaining seat (33).

4. Cooking utility in accordance with any of the aforementioned claims, **characterised in that** the coupling part (2) has a cavity (26) into which the locking plate (5) can be pivoted, thereby preventing the handle part (3) from pivoting in relation to the coupling part (2).

5. Cooking utility in accordance with any of the claims 2 to 4, **characterised in that** the slide (4) has two wings (42) arranged parallel to one another, on the outward-facing side of each of which an engaging tappet (43) is formed, each of which engages a guiding groove arranged within the retaining seat (33).

6. Cooking utility in accordance with any of the aforementioned claims, **characterised in that** the coupling part (2) has at least one blind hole (221) on the side facing the container part (1), into each of which a pin part (11) formed on the container part (1) engages, where at least one spring plate (7) is arranged to lock the pin part (11) in the blind hole (221), which has an opening (71) into which at least two claws (72) at an angle to the plane of the spring plate (7) project, in such a way that it is possible for a pin part (11) to pass through only in the direction of the handle part (3).

7. Cooking utility in accordance with claim 6, **characterised in that** the pin part (11) has a rectangular, preferably a square cross section, where the opening (71) in the spring plate (7) corresponding to the pin part (11) is shaped as a rectangle.

8. Cooking utility in accordance with claim 6 or claim 7, **characterised in that** the coupling part (2) has at least one slot-like opening (222) for fitting a spring plate (7) running into the blind hole (221) or blind holes.

## Revendications

1. Ustensile de cuisson comprenant une partie récipient contre laquelle au moins une poignée est fixée de manière détachable, sachant que contre la partie récipient (1) est fixé un accouplement (2) introduit dans un réceptacle (33) de la poignée (3), sachant que la pièce d'accouplement (2) présente une gorge (24) dans laquelle engrène une nervure (34) agencée dans le réceptacle (33) et sachant que dans le réceptacle (33) est agencée une tôle de sécurisation (5) pivotant sous l'action d'une commande agencée contre la poignée (3), tôle qui dans une position de sécurisation empêche d'extraire l'accouplement (2) du réceptacle (33), **caractérisé en ce que** la commande est formée par un curseur (4) déplaçable le long de la poignée (3), curseur qu'un élément ressort précontraint en direction de la position de sécurisation, sachant que sur l'accouplement (2), à son extrémité regardant la poignée (3), deux bras (25) sont modelés distants l'un de l'autre, sachant que le curseur (4) présente une partie escarpée (44) qui, lorsque la poignée (3) se trouve à l'état monté, passe entre les bras (25) et présente un évidement (45) à son extrémité libre, évidement dans lequel la tôle de sécurisation (5) fait saillie et via laquelle la tôle de sécurisation (5) peut pivoter en déplaçant le curseur (4).

2. Ustensile de cuisson selon la revendication 1, **caractérisé en ce que** le réceptacle (33) est configuré de telle sorte qu'un engrènement / enlèvement de la nervure (34) dans / hors de la gorge (24) de l'accouplement (2) est rendu possible par pivotement de la poignée (3) relativement à l'accouplement (2), sachant que la tôle de sécurisation (5) est configurée de telle sorte que dans une position de sécurisation un mouvement de pivotement de la poignée (3) par rapport à l'accouplement (2) soit bloqué.

3. Ustensile de cuisson selon la revendication 2, **caractérisé en ce que** l'élément ressort est un ressort hélicoïdal (6) agencé à l'intérieur du réceptacle (33).

4. Ustensile de cuisson selon l'une des revendications précédentes, **caractérisé en ce que** l'accouplement (2) présente un creux (26) dans lequel la tôle de sécurisation (5) peut pénétrer en pivotant, ce qui bloque le pivotement de la poignée (3) relativement à l'accouplement (2).

5. Ustensile de cuisson selon l'une des revendications 2 à 4, **caractérisé en ce que** le curseur (4) présente deux ailettes (42) agencées parallèles l'une à l'autre, sur les côtés extérieurs respectifs desquelles une saillie de crantage (43) est modelée qui engrène respectivement dans une gorge de guidage agencée dans le réceptacle (33).

6. Ustensile de cuisson selon l'une des revendications précédentes, **caractérisé en ce que** l'accouplement (2) présente au moins un trou borgne (221) sur son côté tourné vers la partie récipient (1), trou dans lequel engrène un goujon (11) modelé contre la partie récipient (1), sachant que pour immobiliser le goujon (11) dans le trou borgne (221) au moins une tôle ressort (7) est agencée qui présente un orifice de passage (71) dans lequel font saillie au moins deux griffes (72) coudées depuis le plan de la tôle ressort (7), de sorte que le passage d'un goujon (11) ne soit possible qu'en direction de la poignée (3).

7. Ustensile de cuisson selon la revendication 6, **caractérisé en ce que** le goujon (11) présente une section rectangulaire, de préférence une section carrée, sachant que l'orifice (71) de passage de la tôle ressort (7) est configuré d'une géométrie rectangulaire correspondant au goujon (11).

8. Ustensile de cuisson selon la revendication 6 ou 7, **caractérisé en ce que** dans l'accouplement (2) a été ménagé au moins un orifice (222) en forme de fente pour insérer une tôle ressort (7), orifice qui aboutit dans au moins un trou borgne (221).
